# EUROPEAN PATENT APPLICATION

(11) **EP 3 136 261 A1**
(43) Date of publication of application: **01.03.2017**
(21) Application number: 16159742.2
(22) Date of filing: 10.03.2016
(51) Int. Cl.: G06F 17/30

(54) **METHOD AND DEVICE FOR DATA SEARCH**

(30) Priority: 26.08.2015 CN 201510531673
(71) Applicant: Xiaomi Inc., Beijing 100085 (CN)
(72) Inventor: ZHAO, Yonghui, Beijing 100085 (CN); LI, Haifeng, Beijing 100085 (CN); WENG, Haibin, Beijing 100085 (CN)
(74) Representative: Perrot, Emilie

(57) **Abstract**

Method and device for data search are provided, the method including: retrieving (101) a first serialized data corresponding to a first user identifier in a non-relational database; deserializing (102) the first serialized data to obtain a first index; performing (103) a search based on the first index.

## Description

### TECHNICAL FIELD

The present invention generally relates to data processing, and more particularly to a method and a device for data search.

### BACKGROUND

With an ever increasing number of functions of a mobile terminal, more and more data is generated by users of mobile terminals. Users may synchronize personal data to a cloud for storage in order to minimize the memory occupied in the terminal and to avoid performance degradation caused by insufficient storage space. Typically, a cloud server may provide users with a function for retrieving personal data, for example, searching for a message containing a keyword in tens of thousands of messages based on the keyword provided by a user.

In related art, the cloud server may realize a search for personal data based on Structured Query Language (SQL). However, given the poor extensibility of the SQL, particularly when there are a large number of users, there is a huge amount of data stored in the cloud. In this case, the search scope of the server is targeted for all user data, leading to low efficiency, slow speed and poor security for data search, resulting in poor user experience.

### SUMMARY

In view of the fact in related arts that a search for user data suffers from low efficiency and slow speed, a method, device, server and recording medium for data searching an application are provided in the invention.

According to a first aspect, the invention relates to a method for data search, comprising: retrieving a first serialized data corresponding to a first user identifier in a non-relational database; deserializing the first serialized data to obtain a first index; performing a search based on the first index.

In an exemplary embodiment, before the step of retrieving a first serialized data corresponding to a first user identifier in a non-relational database, the method further comprises: acquiring a first user data and a corresponding first user identifier; establishing a first index for the first user data; serializing the first index to obtain a first binary string; storing the first binary string, in association with the first user identifier, in the non-relational database, wherein the first serialized data includes the first binary string.

In an exemplary embodiment, the step of performing a search based on the first index comprises: storing the first index in a memory; performing the search in the memory based on the first index.

In an exemplary embodiment, the method further comprises: modifying a second index corresponding to a second user identifier in response to receiving a modification request including the second user identifier.

In an exemplary embodiment, the step of modifying a second index corresponding to a second user identifier in response to receiving a modification request including the second user identifier comprises: retrieving a second serialized data corresponding to the second user identifier in the non-rational database; deserializing the second serialized data to obtain the second index; modifying the second index based on the modification request; serializing the modified second index to obtain a modified second serialized data; updating the second serialized data stored in the non-rational database to the modified second serialized data.

In an exemplary embodiment, the step of modifying the second index based on the modification request comprises: storing the second index in a memory; modifying the second index in the memory.

According to a second aspect, the invention relates to a device for data search, comprising: a first retrieve module, a first processing module and a search module, wherein: the first retrieve module is configured to retrieve a first serialized data corresponding to a first user identifier in a non-relational database; the first processing module is configured to deserialize the first serialized data to obtain a first index; the search module is configured to perform a search based on the first index.

In an exemplary embodiment, the device further comprises an acquisition module, an index establishment module, a second processing module and a storage module, wherein: the acquisition module is configured to acquire a first user data and a corresponding first user identifier; the index establishment module is configured to establish a first index for the first user data; the second processing module is configured to serialize the first index to obtain a first binary string; the storage module is configured to store the first binary string, in association with the first user identifier, in the non-relational database, wherein the first serialized data includes the first binary string.

In an exemplary embodiment, the search module comprises a first storage sub-module and a search sub-module, wherein: the first storage sub-module is configured to store the first index in a memory; the search sub-module is configured to perform the search in the memory based on the first index.

In an exemplary embodiment, the device comprises a modification module, wherein: the modification module is configured to modify a second index corresponding to a second user identifier in response to receiving a modification request including the second user identifier.

In an exemplary embodiment, the modification module comprises a retrieve sub-module, a first processing sub-module, a modification sub-module, a second processing sub-module and an update sub-module, wherein: the retrieve sub-module is configured to retrieve a second serialized data corresponding to the second user identifier in the non-rational database; the first processing sub-module is configured to deserialize the second serialized data to obtain the second index; the modification sub-module is configured to modifying the second index based on the modification request; the second processing sub-module is configured to serialize the modified second index to obtain a modified second serialized data; the update sub-module is configured to update the second serialized data stored in the non-rational database to the modified second serialized data.

In an exemplary embodiment, the modification sub-module comprises a second storage sub-module and a first modification sub-module, wherein: the second storage sub-module is configured to store the second index in a memory; the first modification sub-module is configured to modify the second index in the memory.

According to a third aspect, the invention relates to a server for data search, comprising: a processor; a memory for storing processor-executable instructions; wherein the instructions, when executed by the processor, cause the processor to: retrieve a first serialized data corresponding to a first user identifier in a non-relational database; deserialize the first serialized data to obtain a first index; perform a search based on the first index.

In one particular embodiment, the steps of the method for data search are determined by computer program instructions.

Consequently, according to a fourth aspect, the invention is also directed to a computer program for executing the steps of a method for data search as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Embodiments of the invention may provide at least some of the following beneficial effects:

In the present invention, serialized data corresponding to a user identifier may be retrieved and deserialized into an index by a server in a NoSQL database and a search may be performed based on the index. Since the search is performed against data corresponding to user identifiers rather than all users, a much smaller search scope is covered, leading to an improved search speed and performance and optimized user experience.

In the present invention, a server establishes indexes separately for different users and serializes the indexes separately into binary strings, and then stores the binary strings and corresponding user identifiers in a NoSQL database for different users, thus time efficiency and consistency of a search may be guaranteed due to better time efficiency and consistency owned by the NoSQL database itself. Besides, since user data is stored in different rows of the NoSQL database, the search is carried out targeting data corresponding to user identifiers, thereby contributing to the protection of user privacy and resulting in improved security. Moreover, search security may be further ensured due to the fact that the NoSQL database may backup a plurality of underlying copies automatically. In addition, compared to the pure search scheme, less servers may be needed when the number of users increases due to the storage characteristic of the NoSQL database itself.

In the present invention, a first index is stored in a memory and a search is performed based on the first index. Compared to searching in the disk with a huge amount of data, the retrieve speed of this method is greatly improved.

In the present invention, a server may also modify an index, deserialize a binary string corresponding to a user identifier into an index, modify the index, serialize the modified index into a binary string, and update the binary string stored in a NoSQL database. Thus the time efficiency of a search may be guaranteed by updating the data stored in the NoSQL database timely in the case that there is a need to add, delete or modify user data.

In the present invention, modification to user data may be performed in a memory to improve speed and performance of a search.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figs. 1 is a flow diagram illustrating a method for data search according to an exemplary embodiment.
Fig. 2 is a flow diagram illustrating another method for data search according to an exemplary embodiment.
Fig. 3 is a scenario diagram illustrating an application scenario for data search according to an exemplary embodiment.
Fig. 4 is a block diagram illustrating a device for data search according to an exemplary embodiment.
Fig. 5 is a block diagram illustrating another device for data search according to an exemplary embodiment.
Fig. 6 is a block diagram illustrating another device for data search according to an exemplary embodiment.
Fig. 7 is a block diagram illustrating another device for data search according to an exemplary embodiment.
Fig. 8 is a block diagram illustrating another device for data search according to an exemplary embodiment.
Fig. 9 is a block diagram illustrating another device for data search according to an exemplary embodiment.
Fig. 10 is a structural schematic diagram illustrating a device for data search according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

The terms used in present invention are merely for describing the particular embodiments rather than limiting the present invention. Terms, such as "a" "an", "said", and "the", as used in singular form in present invention and appended claims include plural form, unless otherwise represent other meaning clearly in the context. It also should be understood that the term "and/or" used herein indicates and comprises any or all of possible combinations of one or more associated items which have been listed.

It should be understood that the terms "first," "second," and "third," may be used to describe various information, but it not limit to these terms. These terms are only used to separate the same type of the information from each other. For example, the first information may also be referred as the second information without departing from the scope of the present invention, similarly the second information may also be referred as the first information. The word "if" as used herein may be interpreted as "when" or "while" or "respond to determination" depending on the context.

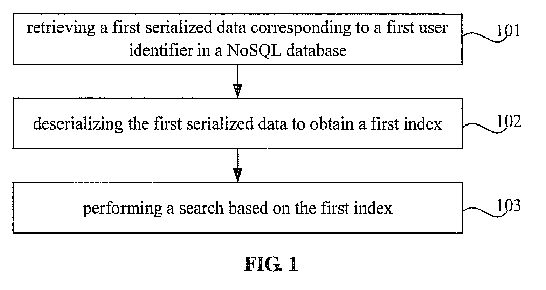

Fig. 1 is a flow diagram illustrating a method for data search according to an exemplary embodiment. As illustrated in Fig. 1, the method is performed by a server, and may include the following steps.

In step 101, first serialized data corresponding to a first user identifier is retrieved in a non-relational database.

The server in the present invention may be cloud servers such as servers of Xiaomi Inc, and the like. A terminal in the present invention may be any Internet-enabled smart terminal, for example, a mobile phone, a tablet computer, a personal digital assistant (Personal Digital Assistant, PDA) and the like. More particular, the terminal may access a router via wireless LAN and then access a server in a public network through the router.

The non-relational database in the invention is a Non-relational Structured Query Language (NoSQL) database.

In step 102, a first index is obtained by deserializing the first serialized data.

Among them, serialization is a mechanism for supporting the streaming of user-defined types in .NET operating environment. Serialization is to save an object to a file or a database field, while deserialization is to translate the serialized file into the original object.

In step 103, a search is performed based on the first index.

It can be seen from the above that serialized data corresponding to a user identifier may be retrieved and deserialized into an index by a server in the NoSQL database and a search may be performed based on the index. Since the search is performed against data corresponding to user identifiers rather than all users, a much smaller search scope is covered, leading to an improved search speed and performance and optimized user experience.

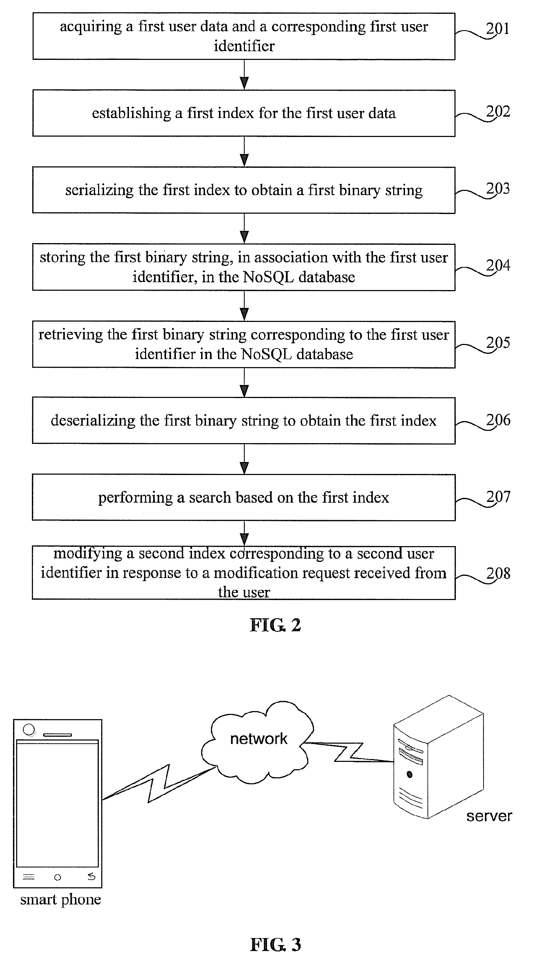

Fig. 2 is a flow diagram illustrating another method for data search according to an exemplary embodiment. As illustrated in Fig. 2, the method is performed by a server, and may include the following steps.

In an embodiment of the invention, personal data of a user may be processed as a binary string and stored in a NoSQL database by a server.

In step 201, first user data and a corresponding user identifier may be acquired.

In this step of the invention, first user data uploaded by a first user may be received by the server. Alternatively, user data may be acquired by the server at set time intervals. The first user data may include personal data such as messages, contacts, e-mails, chats and photographs of the first user. A first user identifier may also be received by the server in addition to the first user data. For example, the first user identifier received by servers of XiaoMi Inc. may be XiaoMi account information of the first user. Besides, the user identifier can also be a cell phone number of a user, a media access control (MAC) address of a terminal, etc.

In step 202, a first index is established for the first user.

In this step of the invention, the first user data is initialized by the server and the first index is established for the first user via search engines such as Lucene. That is to say, indexes are established separately for different users by the server. The index may include a plurality of files such as an inverted list and a word list.

In step 203, a first binary string is obtained by serializing the first index.

In this step of the invention, the server serializes the first index (that is, an inverted list, a word list and various other files) into the first binary string such as an XML string, a JSON string, a binary stream and the like according to an underlying format of the index, for example, one name corresponding to one element. Generally, a binary string such as an index including thousands of messages or thousands of photographs are relatively small or even no more than 2 Megabit and occupy a small storage space. Among them, serialization may be performed by methods employed in related arts, for example, XML Serialization, Binary Formatter, Soap Formatter and the like.

In step 204, the first binary string is stored in association with the first user identifier in the NoSQL database.

In this step of the invention, the server stores a user identifier and a binary string of each user in respective NoSQL database, for example, Casssandra, Lucene/Solr, BigTable/ Accumulo/ Hypertable and the like.

That is to say, in this step of the invention, the server stores binary strings of different users in different rows of the NoSQL database, and the binary string of each user is physically separated, thus contributing to the protection of user privacy and results in improved security. The server then performs a search based on the index stored in the NoSQL database upon receiving a search request from the user.

In step 205, the first binary string corresponding to the first user identifier is retrieved in the NoSQL database.

In this step of the invention, upon receiving the search request carrying a search criteria entered by the first user, the server may extract the first user identifier of the first user from the search request, and search and retrieve a corresponding first serialized data, wherein the first serialized data may be a binary string (the first binary string).

In step 206, a first index is obtained by deserializing the first binary string.

In this step of the invention, only deserialized files are readable by the server and can be used by the server to carry out the subsequent search step. Therefore, the server obtains the first index by deserializing the first binary string, i.e., the plurality of files corresponding to the personal data of the first user.

Among them, since the NoSQL database is located on the disk of the server, the server may retrieve the first binary string from the disk into the memory for storage and then deserialize the first binary string in the memory to generate the first index.

In step 207, the search is performed based on the first index.

In this step of the invention, various search operations may be performed based on the search criteria and the first index when the first index is generated in the memory.

Because of the larger memory storage space and the smaller space occupied by the index of a single user, the index of the user is stored in the memory to be searched. Compared to searching in the disk with a huge amount of data, the retrieve speed of this method is greatly improved. Besides, since only retrieve operation is performed in the memory, occupied memory space will be released after the search is completed.

In related art, the server generates indexes for user data of all users and stores all of the indexes on the disk of the server, producing a huge amount of data (even as much as tens of Gigabit), resulting in slow speed to open the disk and thus the slow search speed and poor search performance, failing to meet the needs of the customer. In an embodiment of the invention, indexes are established separately for user data of different users and the binary string corresponding to each index is stored in association with the user identifier, thus when a search for a user's data is needed, a search for a corresponding index may be performed simply based on the user identifier, narrowing greatly the search scope and at the same time improving significantly the search speed.

In an embodiment of the invention, when new user data is uploaded by a user or user data is modified or deleted, the server need to modify the index. In this case, the embodiment of the invention may further include the following step.

In step 208, a second index corresponding to a second user identifier may be modified in response to a modification request received from the user.

In this step of the invention, the server acquires the second user identifier in the modification request, retrieves a corresponding second binary string according to the second user identifier, and then retrieves the second binary string from the disk into the memory and deserializes the second binary string to obtain a second index corresponding to the second user identifier, and then modifies the second index based on the modification request in the memory, at last serializes the modified second index into a binary string and stores the binary string in the NoSQL database, that is to say, the second binary string stored in the NoSQL database is updated to the binary string corresponding to the modified second index.

In the abovementioned embodiment of the invention, since the index of each user is independent, the search scope is better targeted and the search performance is guaranteed. Therefore, the number of the users whose data may be stored by a server depends on the storage size of the NoSQL. For example, if the size of the index of each user is 2 Mb, and the size of the disk space of a server is 100 Gigabit, then about 100G/2M=50 thousand users may be served by the server. If a search method based on pure search such as Lucene employed in the related art is utilized, in which indexes for the 50 thousand users may be stored in the 100 Gb disk space, the search may targets at data of all users, thus resulting in poor search performance and long search latency. In order to ensure search performance, the amount of user data stored in the server may need to be reduced, making it impossible to store data of 50 thousand users, in fact, perhaps only data of 10 thousand users may be stored. The target search scope of the invention is not all users, so the search performance thereof may be improved. For a single server, the scheme proposed in the invention is capable of storing data of more user, therefore the scheme proposed in the invention needs less servers than the related art.

Fig. 3 is a scenario diagram illustrating an application scenario for data search according to an exemplary embodiment. As illustrated in Fig. 3, the scenario includes a server and a smart phone.

The server receives from a user of the smart phone a search request carrying a search criteria and a user identifier of the user, retrieves a binary string corresponding to the user identifier from the NoSQL database based on the user identifier, then deserializes the retrieved binary string to obtain an index corresponding to the user identifier, and retrieves the index into the memory and performs a search based on the index and the search criteria.

In the scenario illustrated in Fig. 3, descriptions for Fig. 1 and Fig.2 may be referred to for the process to carry out data search, which is not repeated herein.

Corresponding to embodiments of methods for data search, embodiments of devices for data search and servers used therein are also provided herein.

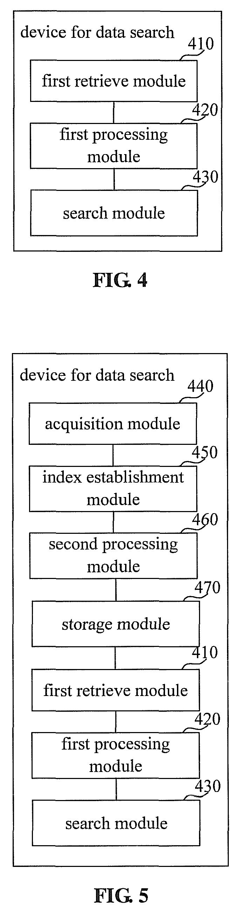

Fig. 4 is a block diagram illustrating a device for data search according to an exemplary embodiment. The device may include a first retrieve module 410, a first processing module 420, and search module 430.

Among them, the first retrieve module 410 is configured to retrieve a first serialized data corresponding to a first user identifier in a NoSQL database; the first processing module 420 is configured to obtain a first index by deserializing the first serialized data retrieved by the first retrieve module 410; the search module 430 is configured to perform a search based on the first index obtained by the first processing module 420.

In the abovementioned embodiment, the server may retrieve serialized data corresponding to a user identifier in a NoSQL database, deserialize the serialized data into an index and perform a search based on the index. Since the search is performed against data corresponding to user identifiers rather than all users, a much smaller search scope is covered, leading to an improved search speed and performance and optimized user experience.

Fig. 5 is a block diagram illustrating another device for data search according to an exemplary embodiment. In addition to the modules illustrated in Fig. 4, the device may further include an acquisition module 440, an index establishment module 450, a second processing module 460 and a storage module 470.

Among them, the acquisition module 440 is configured to acquire first user data and a corresponding first user identifier.

The index establishment module 450 is configured to establish an index for the first user data acquired by the acquisition module 440.

The second processing module 460 is configured to serialize the index established by the index establishment module 450 to obtain a binary string.

The storage module 470 is configured to store the binary string obtained by the second processing module 460 in association with the first user identifier in the NoSQL database, wherein the first serialized data includes the binary string.

In the abovementioned embodiment, a server establishes indexes separately for different users and serializes the indexes separately into binary strings, and then stores the binary strings and corresponding user identifiers in a NoSQL database for different users, thus time efficiency and consistency of a search may be guaranteed due to better time efficiency and consistency owned by the NoSQL database itself. Besides, since user data is stored in different rows of the NoSQL database, the search is carried out targeting data corresponding to user identifiers, thereby contributing to the protection of user privacy and resulting in improved security. Moreover, search security may be further ensured due to the fact that the NoSQL database may backup a plurality of underlying copies automatically. In addition, compared to the pure search scheme, less servers may be needed when the number of users increases due to the storage characteristic of the NoSQL database itself.

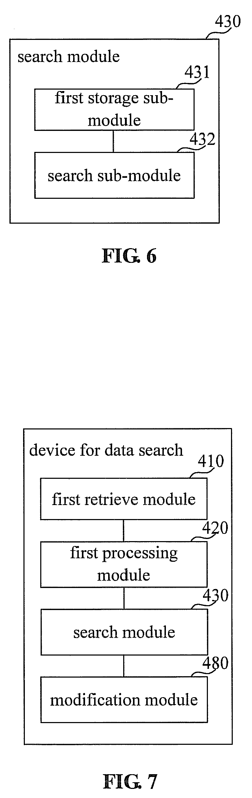

Fig. 6 is a block diagram illustrating another device for data search according to an exemplary embodiment. The search module 430 illustrated in Fig. 4 may include a first storage sub-module 431 and a search sub-module 432.

Among them, the first storage sub-module 431 is configured to store a first index in the memory; the search sub-module 432 is configured to perform a search in the memory based on the first index stored by the first storage sub-module 431.

In the abovementioned embodiment, a first index may be stored in the memory and a search may be performed in the memory based on the first index. Retrieve speed may be greatly improved for the search performed in the memory compared to the search performed in a disk that has a huge amount of data.

Fig. 7 is a block diagram illustrating another device for data search according to an exemplary embodiment. In addition to the modules illustrated in Fig. 4, the device may further include a modification module 480.

Among them, the modification module 480 is configured to modify a second index corresponding to a second user identifier in response to receiving a modification request, wherein the modification request contains the second user identifier.

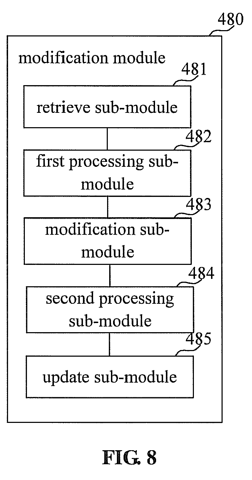

Fig. 8 is a block diagram illustrating another device for data search according to an exemplary embodiment. The modification module 480 illustrated in Fig. 7 may include a retrieve sub-module 481, a first processing sub-module 482, a modification sub-module 483, a second processing sub-module 484 and a update sub-module 485.

Among them, the retrieve sub-module 481 is configured to retrieve a second serialized data corresponding to a second user identifier in a NoSQL database.

The first processing sub-module 482 is configured to deserialize the second serialized data retrieved by the retrieve sub-module 481 to obtain a second index.

The modification sub-module 483 is configured to modify the second index obtained by the first processing sub-module 482 based on the modification request.

The second processing sub-module 484 is configured to serialize the second index modified by the modification sub-module 483 to obtain a second serialized data that has been modified.

The update sub-module 485 is configured to update the second serialized data stored in the NoSQL database to the second serialized data that has been modified

In the abovementioned embodiment, a server may also modify an index, deserialize a binary string corresponding to a user identifier into an index, modify the index, serialize the modified index into a binary string, and update the binary string stored in a NoSQL database. Thus the time efficiency of a search may be guaranteed by updating the data stored in the NoSQL database timely in the case that there is a need to add, delete or modify user data.

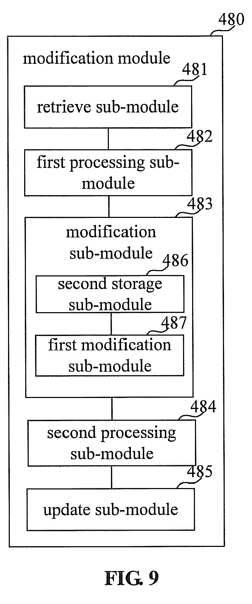

Fig. 9 is a block diagram illustrating another device for data search according to an exemplary embodiment. In addition to the modules illustrated in Fig. 8, the device may further include a second storage sub-module 486 and a first modification sub-module 487.

Among them, the second storage sub-module 486 is configured to store a second index in the memory.

The first modification sub-module 487 is configured to modify the second index stored by the second storage sub-module 486 in the memory.

In the abovementioned embodiment, modification to user data may also be performed in the memory to improve speed and performance of a search.

Description of a corresponding step of a method may be referred to for the details of the process in which function and effect of respective module are realized.

For embodiments of a device, since it substantially corresponds to embodiments of a method, description of a certain part of the method may be referred to for description of a relevant part of the device. The above-described embodiments of a device are for illustrative purposes only, wherein elements described as separate components may or may not be physically separated, and components illustrated as elements may or may not be physical elements (i.e., these components may be located in the same place, or be distributed in several network elements). Part or all of the modules may be selected to realize the purposes of the scheme of this invention according to actual needs. Those of ordinary skill in the art may be able to understand and practice the scheme without creative efforts.

Accordingly, a server is provided in the invention, the server comprising: a processor; a memory for storing processor-executable instructions; wherein the processor is configured to: retrieve a first serialized data corresponding to a first user identifier in a non-relational database; obtain a first index by deserializing the first serialized data; perform a search based on the first index.

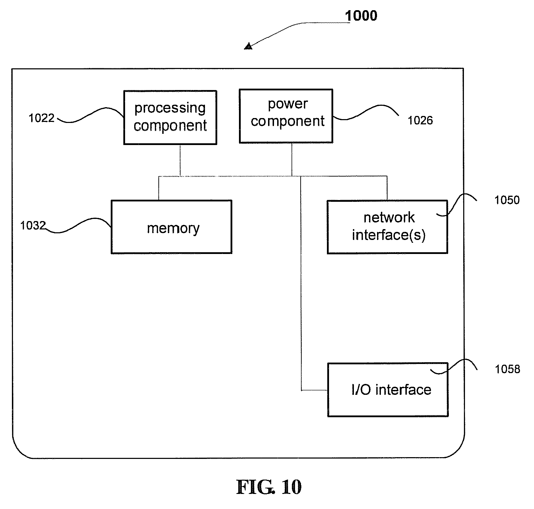

Fig. 10 is a structural schematic diagram illustrating a device 1000 for data search according to an exemplary embodiment. For example, the device 1000 may be a server. The device 1000 may include a processing component 1022 (e.g. one or more processors), and storage resources such as a memory 1932 for storing processing component 1022 executable instructions such as applications programs. The application programs stored in the memory 1932 may include one or more modules (not shown). Each module may include a set of instructions for operations on the device 1000. Further, the processing component 1022 may be configured to execute the sets of instructions and perform the operations on the device 1000.

The device 1000 may also include a power supply 1026 configured to perform power management for the device 1000, a wired or wireless network interfaces 1050 configured to connect the device 1000 to network, and/or an input/output interfaces 1058. The device 1000 may operate an operating systems stored in the memory 1032, such as Windows ServerTM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for data search, **characterized in that** it comprises:
retrieving (101, 205) a first serialized data corresponding to a first user identifier in a non-relational database;
deserializing (102, 206) the first serialized data to obtain a first index;
performing (103, 207) a search based on the first index.

2. The method of claim 1, wherein before the step (101, 205) of retrieving a first serialized data corresponding to a first user identifier in a non-relational database, the method further comprises:
acquiring (201) a first user data and a corresponding first user identifier;
establishing (202) a first index for the first user data;
serializing (203) the first index to obtain a first binary string;
storing (204) the first binary string, in association with the first user identifier, in the non-relational database, wherein the first serialized data includes the first binary string.

3. The method of claim 1, wherein the step (207) of performing a search based on the first index comprises:
storing the first index in a memory;
performing the search in the memory based on the first index.

4. The method of claim 1, wherein the method further comprises:
modifying (208) a second index corresponding to a second user identifier in response to receiving a modification request including the second user identifier.

5. The method of claim 4, wherein the step (208) of modifying a second index corresponding to a second user identifier in response to receiving a modification request including the second user identifier comprises:
retrieving a second serialized data corresponding to the second user identifier in the non-rational database;
deserializing the second serialized data to obtain the second index;
modifying the second index based on the modification request;
serializing the modified second index to obtain a modified second serialized data;
updating the second serialized data stored in the non-rational database to the modified second serialized data.

6. The method of claim 5, wherein the step (208) of modifying the second index based on the modification request comprises:
storing the second index in a memory;
modifying the second index in the memory.

7. A device for data search, **characterized in that** it comprises a first retrieve module (410), a first processing module (420) and a search module (430), wherein:
the first retrieve module (410) is configured to retrieve a first serialized data corresponding to a first user identifier in a non-relational database;
the first processing module (420) is configured to deserialize the first serialized data to obtain a first index;
the search module (430) is configured to perform a search based on the first index.

8. The device of claim 7, wherein the device further comprises an acquisition module (440), an index establishment module (450), a second processing module (460) and a storage module (470), wherein:
the acquisition module (440) is configured to acquire a first user data and a corresponding first user identifier;
the index establishment module (450) is configured to establish a first index for the first user data;
the second processing module (460) is configured to serialize the first index to obtain a first binary string;
the storage module (470) is configured to store the first binary string, in association with the first user identifier, in the non-relational database, wherein the first serialized data includes the first binary string.

9. The device of claim 7, wherein the search module (430) comprises a first storage sub-module (431) and a search sub-module (432), wherein:
the first storage sub-module (431) is configured to store the first index in a memory;
the search sub-module (432) is configured to perform the search in the memory based on the first index.

10. The device of claim 7, wherein the device comprises a modification module (480), wherein:
the modification module (480) is configured to modify a second index corresponding to a second user identifier in response to receiving a modification request including the second user identifier.

11. The device of claim 10, wherein the modification module (480) comprises a retrieve sub-module (481), a first processing sub-module (482), a modification sub-module (483), a second processing sub-module (484) and an update sub-module (485), wherein:
the retrieve sub-module (481) is configured to retrieve a second serialized data corresponding to the second user identifier in the non-rational database;
the first processing sub-module (482) is configured to deserialize the second serialized data to obtain the second index;
the modification sub-module (483) is configured to modifying the second index based on the modification request;
the second processing sub-module (484) is configured to serialize the modified second index to obtain a modified second serialized data;
the update sub-module (485) is configured to update the second serialized data stored in the non-rational database to the modified second serialized data.

12. The device of claim 11, wherein the modification sub-module (483) comprises a second storage sub-module (486) and a first modification sub-module (487), wherein:
the second storage sub-module (486) is configured to store the second index in a memory;
the first modification sub-module (487) is configured to modify the second index in the memory.

13. A computer program including instructions for executing the steps of a method for data search according to any one of claims 1 to 6 when said program is executed by a computer.

14. A recording medium readable by a computer having recorded thereon a computer program including instructions for executing the steps of a method for data search according to any one of claims 1 to 6.
